# EUROPEAN PATENT APPLICATION

(11) **EP 3 416 004 A1**
(43) Date of publication of application: **19.12.2018**
(21) Application number: 18177818.4
(22) Date of filing: 14.06.2018
(51) Int. Cl.: G05B 19/042

(54) **DEVICE MANAGEMENT APPARATUS, DEVICE MANAGEMENT METHOD, DEVICE MANAGEMENT PROGRAM, AND NON-TRANSITORY COMPUTER READABLE STORAGE MEDIUM**

(30) Priority: 16.06.2017 JP 2017118776
(71) Applicant: Yokogawa Electric Corporation, Tokyo 180-8750 (JP)
(72) Inventor: NAKAGAWA, Shinya, Musashino-shi, Tokyo 180-8750 (JP)
(74) Representative: Henkel, Breuer & Partner

(57) **Abstract**

A device management apparatus includes a device controller configured to control a device, and a management device configured to manage the device controller. The device controller includes a screen generator configured to generate information representing a screen based on information acquired from the device corresponding to a device identifier. The management device includes a device identifier acquirer configured to acquire the device identifier, an image acquirer configured to acquire the information representing the screen from the device controller controlling the device corresponding to the device identifier, the image acquirer being configured to generate an image based on the information representing the screen, and an image writer configured to write the device identifier and the image to a storage in association with each other.

## Description

### BACKGROUND

### Technical Fields

The present invention relates to a device management apparatus, a device management method, a device management program, and a non-transitory computer readable storage medium.

Priority is claimed on Japanese Patent Application No. 2017-118776, filed June 16, 2017.

### Related Art

There is a technology in which field devices installed in plants, factories or the like are managed and controlled using field device tool/device type manager (FDT/DTM) technology (for example, see Japanese Patent No. 5209720). Data such as parameter values that a DTM acquires from a field device is managed by an FDT frame application and is saved as DTM save data. A DTM that provides a graphical screen such as a gauge/trend graph (hereinafter referred to as a "device management screen") has appeared in recent years.

Incidentally, the DTM sometimes cannot communicate with the field device, for example, when a problem has occurred in the field device. In this case, the DTM can reproduce the device management screen using the DTM save data described above. However, when the device management screen is reproduced using the DTM save data, it is necessary to perform a preliminary task such as setup of an application for reproducing the device management screen on each terminal that reproduces the device management screen. Therefore, particularly, when there are a number of terminals, such a preliminary task increases and it is not easy to reproduce the device management screen.

Thus, saving the device management screen in a general-purpose data format (for example, in a data format such as a Joint Photographic Experts Group (JPEG) format or a bitmap format (Bitmap)) ensures that the device management screen can be reproduced using general-purpose image viewing software even if there is no dedicated application for reproducing the device management screen.

However, in cases where device management screens are saved and managed in a general-purpose data format, a user needs to perform a task of screen capture of a displayed device management screen at a normal time (that is, when the DTM can acquire data such as parameter values from the field device and can generate the device management screen), for example, using a screen capture function (for example, a print screen function) provided by an operating system (OS) (basic software). Then, the user needs to perform a task of saving a captured images obtained by the screen capture in a general-purpose data format using image editing software or the like. Further, the user needs to perform a task of managing the saved captured images in association with an identifier (for example, a device ID) that identifies the corresponding field device. Thus, when screen capture is performed using the screen capture function of the OS, there is a problem that the task of managing the captured images is complicated.

### SUMMARY

A device management apparatus includes a device controller configured to control a device, and a management device configured to manage the device controller. The device controller includes a screen generator configured to generate information representing a screen based on information acquired from the device corresponding to a device identifier. The management device includes a device identifier acquirer configured to acquire the device identifier, an image acquirer configured to acquire the information representing the screen from the device controller controlling the device corresponding to the device identifier, the image acquirer being configured to generate an image based on the information representing the screen, and an image writer configured to write the device identifier and the image to a storage in association with each other.

Further features and aspects of the present disclosure will become apparent from the following detailed description of exemplary embodiments with reference to the attached drawings.

### BRIEF DESCRIPTION OF THE DRAWINGS

FIG. 1 is a schematic diagram showing an overall configuration of a device management system in which a device management apparatus according to a first embodiment of the present invention is used.
FIG. 2 is a block diagram showing a functional configuration of the device management apparatus according to the first embodiment of the present invention.
FIG. 3 is a schematic diagram showing a procedure of screen capture processing of the device management apparatus according to the first embodiment of the present invention.
FIG. 4 is a schematic diagram showing an example of a device management screen displayed by the device management apparatus according to the first embodiment of the present invention.
FIG. 5 is a flowchart showing an example of the operation of the device management apparatus according to the first embodiment of the present invention.
FIG. 6 is a block diagram showing a functional configuration of an FDT frame application of a device management apparatus according to a second embodiment of the present invention.

### DETAILED DESCRIPTION OF THE EMBODIMENTS

The embodiments of the present invention will be now described herein with reference to illustrative preferred embodiments. Those skilled in the art will recognize that many alternative preferred embodiments can be accomplished using the teaching of the present invention and that the present invention is not limited to the preferred embodiments illustrated herein for explanatory purposes.

An aspect of the present invention is to provide a device management apparatus, a device management method, a device management program, and a non-transitory computer readable storage medium that can easily manage captured images of a device management screen.

Hereinafter, the present invention will be described through embodiments of the invention, but the following embodiments do not limit the invention according to the claims. Not all combinations of features described in the following embodiments are necessarily essential as means for solving the invention. In the drawings, the same or similar parts are denoted by the same reference numerals and redundant explanations will sometimes be omitted. The shapes and sizes of elements in the drawings may be exaggerated for a clearer explanation.

### <First embodiment>

A device management system MS according to a first embodiment of the present invention will now be described with reference to the drawings.

### [Overall configuration of device management system]

An overall configuration of the device management system MS according to the present embodiment will be described below.

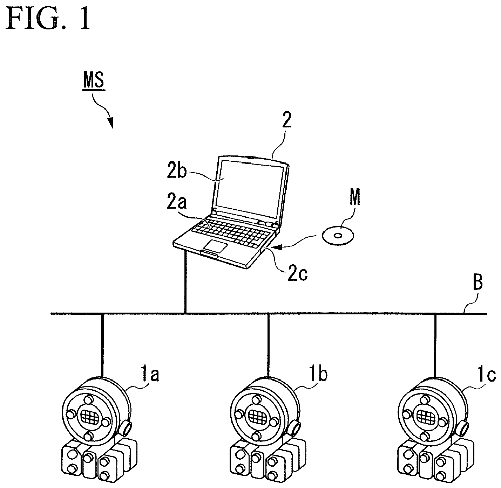

FIG. 1 is a schematic diagram showing the overall configuration of the device management system MS in which a device management apparatus 2 according to the first embodiment of the present invention is used. As shown, the device management system MS includes field devices 1a to 1c (devices) and the device management apparatus 2 which are connected to each other via a communication bus B, and the device management apparatus 2 performs communication with the field devices 1a to 1c via the communication bus B to manage and control the field devices 1a to 1c. In FIG. 1, three field devices 1a to 1c are shown for ease of description, but the number of field devices connected to the communication bus B is arbitrary.

Examples of the field devices 1a to 1c (devices) include a sensor device such as a flow meter or a temperature sensor, a valve device such as a flow rate control valve or an opening/closing valve, an actuator device such as a fan or a motor, and other devices installed on site at a plant or a factory. The operations of the field devices 1a to 1c are controlled based on control data transmitted from the device management apparatus 2 via the communication bus B. Measurement data obtained by the field devices 1a to 1c is collected by the device management apparatus 2 via the communication bus B.

The communication bus B is a wired communication bus laid in a plant or the like and connects the field devices 1a to 1c installed on site at the plant or the like and the device management apparatus 2 installed, for example, in a management room of the plant or the like. For example, a serial communication bus defined as a Foundation Fieldbus (registered trademark), Highway Addressable Remote Transducer (HART) (registered trademark), PROFIBUS (registered trademark), BRAIN, or the like can be used as the communication bus B.

The field devices 1a to 1c may be communicatively connected, for example, over a wired industrial network based on HART (registered trademark), Fieldbus (registered trademark) or the like or a wireless industrial network based on ISA 100.11a or WirelessHART (registered trademark).

The device management apparatus 2 manages and controls the field devices 1a to 1c while exchanging various parameters with the field devices 1a to 1c via the communication bus B. For example, the device management apparatus 2 acquires parameters set in the field devices 1a to 1c to determine current measurement conditions thereof and sets new parameters in the field devices 1a to 1c to change the measurement conditions or the like. The device management apparatus 2 is operated by a user (such as an administrator of the device management system MS).

The device management apparatus 2 is realized by a notebook- or desktop-type personal computer or the like including an input device 2a such as a keyboard, a display device 2b such as a liquid crystal display device, a drive device 2c, or the like. The drive device 2c is, for example, a device that reads data recorded on a computer-readable recording medium M such as a CD-ROM or a DVD (registered trademark)-ROM. The function of the device management apparatus 2 (i.e., the function of managing and controlling the field devices 1a to 1c) is realized by software such that the drive device 2c reads and installs a program recorded on the recording medium M.

### [Functional configuration of device management apparatus]

A functional configuration of the device management apparatus 2 according to the present embodiment will be described below.

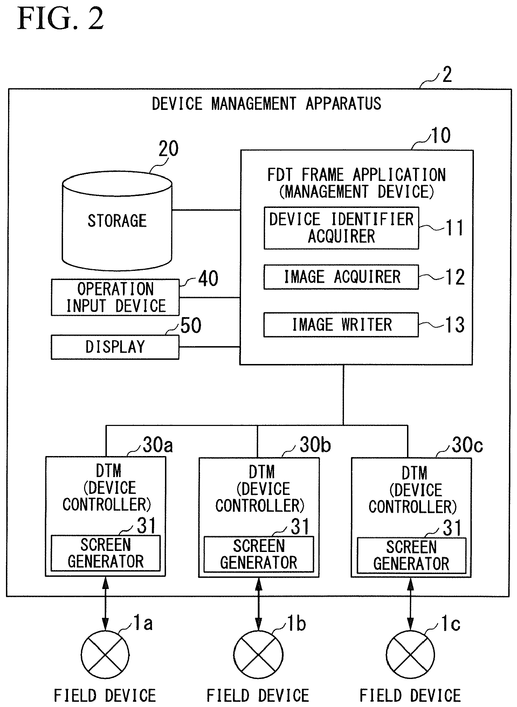

FIG. 2 is a block diagram showing the functional configuration of the device management apparatus 2 according to the first embodiment of the present invention. As shown, the device management apparatus 2 includes an FDT frame application 10 (management device), a storage 20, DTMs 30a to 30c (device controllers), an operation input device 40, and a display 50.

The FDT frame application 10 (management device) is a main application of the device management apparatus 2 designed using FDT technology. The FDT frame application 10 manages the DTMs 30a to 30c and provides the user with an interface for enabling them to operate the DTMs 30a to 30c.

The FDT frame application 10 includes a device identifier acquirer 11, an image acquirer 12, and an image writer 13.

The device identifier acquirer 11 acquires, from each of the DTMs 30a to 30c that respectively manage the field devices 1a to 1c, a corresponding one of device identifiers which are identifiers identifying the field devices 1a to 1c and which are associated respectively with the field devices 1a to 1c.

Upon acquiring a capture instruction based on an operation input performed by the user, the image acquirer 12 acquires a device identifier acquired by the device identifier acquirer 11. The capture instruction is an instruction to cause the FDT frame application 10 of the device management apparatus 2 to acquire a captured images of a management screen. For example, the capture instruction is given to the FDT frame application 10 when a desired device management screen is displayed on a display having the display 50 of the device management apparatus 2 and a screen capture button or the like displayed on the device management screen is clicked by an operation of the user.

Then, the image acquirer 12 designates the acquired device identifier and acquires information indicating a device management screen (a screen that indicates the state or the like of a field device 1a to 1c and that is generated by a DTM 30a to 30c) from the DTM 30a to 30c that manages the field device 1a to 1c with which the designated device identifier is associated. The information indicating the device management screen is information necessary for the FDT frame application 10 to display the device management screen. For example, this may be image information indicating the device management screen or information including data to be displayed on the device management screen.

Then, the image acquirer 12 generates a captured images (image) by executing screen capture on the device management screen based on the acquired information. The captured images is image data that is generated by capturing the device management screen, converted into a general image file format (for example, a bitmap format, a JPEG format, or a portable network graphics (PNG) format), and stored in the storage 20.

The image writer 13 writes the information based on the device identifier acquired by the device identifier acquirer 11 and the captured images acquired by the image acquirer 12 to the storage 20 in association with each other.

The storage 20 stores (saves) the information based on the device identifier and the captured images which are associated with each other by the image writer 13.

The storage 20 is configured using a storage medium such as a hard disk drive (HDD), a flash memory, an electrically erasable programmable read only memory (EEPROM), a random access read/write memory (RAM) (readable/writable memory), or a read only memory (ROM), or any combination of these storage media.

The DTMs 30a to 30c (device controllers) are programs of sub-applications that communicatively connect to and control the field devices 1a to 1c in accordance with instructions from the FDT frame application 10.

Each of the DTMs 30a to 30c includes a screen generator 31.

The screen generator 31 generates information indicating a device management screen based on information acquired from one of the field devices 1a to 1c that is managed by a corresponding one of the DTMs 30a to 30c. The information that the screen generator 31 acquires from the field device 1a to 1c is, for example, information regarding a measurement value measured by the field device 1 a to 1c or a setting state (for example, a setting parameter value) of the field device 1a to 1c.

The operation input device 40 receives information indicating an operation input from the user (for example, an operation input that the user performs on the device management screen). The information indicating the operation input may also include a device identifier identifying the field device 1a to 1c.

The operation input device 40 includes, for example, a keyboard and the like. The operation input device 40 may further include an input button, a mouse, a pointing device, a microphone, or the like.

It is to be noted that the operation input device 40 and the display 50 which will be described later may be constituted by a single member (for example, a touch panel) having, for example, both an input function and an output function.

The display 50 displays various types of information (for example, a device management screen) that is to be presented to the user who is using the device management apparatus 2. The display 50 includes a display, for example, a liquid crystal display (LCD), an organic electroluminescence (EL) display, or a cathode ray tube (CRT).

The operation input device 40 may be an input interface for connecting to an external input device (for example, a keyboard or a touch panel) to receive an operation input from the user.

Further, the display 50 may be an output interface for connecting to an external output device (for example, a liquid crystal display) to output various types of information that is to be presented to the user who is using the device management apparatus 2.

### [Procedure of screen capture processing]

A procedure of screen capture processing will be described below.

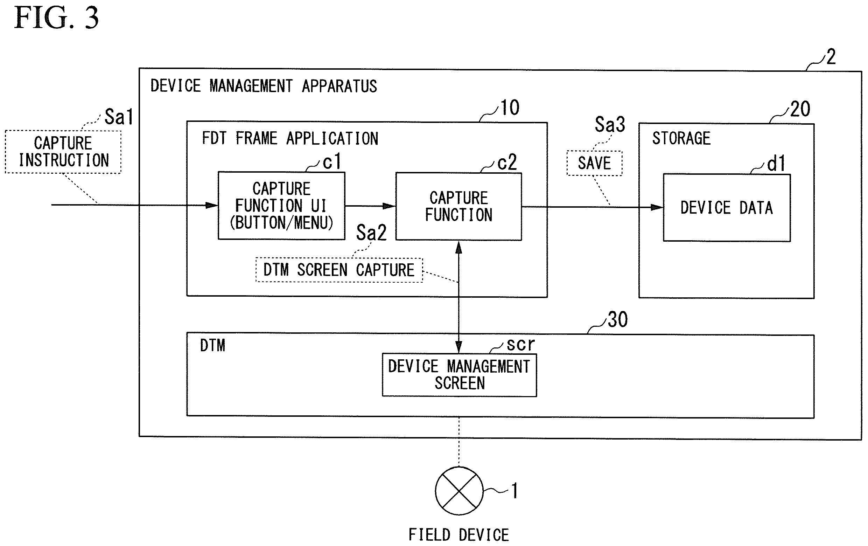

FIG. 3 is a schematic diagram showing the procedure of screen capture processing of the device management apparatus 2 according to the first embodiment of the present invention.

First, when a device management screen scr (including a capture function UI c1 such as a screen capture button) on which the user wishes to perform screen capture is being displayed on the display having the display 50 of the device management apparatus 2 according to the present embodiment, a capture instruction Sa1, which is an instruction to acquire a captured images of the device management screen scr, is given to the FDT frame application 10 of the device management apparatus 2 by an operation input from the user as shown in FIG. 3.

For example, the capture instruction Sa1 is given to the FDT frame application 10 of the device management apparatus 2 by positioning a pointer on a screen area (not shown) in which an image of the screen capture button is displayed in the device management screen scr displayed on the display (not shown) or on a screen area (not shown) in which a menu item indicating screen capture is displayed in a menu in the device management screen scr and clicking using a mouse having the operation input device 40 of the device management apparatus 2.

When the capture instruction Sa1 is given to the FDT frame application 10 of the device management apparatus 2, a capture function c2 of the FDT frame application 10 is activated. Based on the device management screen scr that the FDT frame application 10 displays on the display, the FDT frame application 10 specifies a DTM 30 that generates the device management screen scr and a device identifier that is associated with a field device 1 that is managed by the DTM 30. Then, the FDT frame application 10 outputs a request to acquire the device management screen scr to the DTM 30 that manages the field device 1 corresponding to the specified device identifier.

The DTM 30 of the device management apparatus 2 executes a process of generating information indicating the device management screen scr based on the request to acquire the device management screen scr which has been acquired from the FDT frame application 10. Specifically, the DTM 30 communicatively connects to a field device 1 that is managed by the DTM 30 and obtains information regarding the field device 1, for example, information indicating a measurement value measured by the field device 1 or information regarding a setting state of the field device 1. Then, the DTM 30 generates information indicating the device management screen scr based on the information acquired from the field device 1.

The DTM 30 of the device management apparatus 2 outputs the generated information indicating the device management screen scr to the FDT frame application 10.

Upon acquiring the information indicating the device management screen scr from the DTM 30, the FDT frame application 10 of the device management apparatus 2 executes DTM screen capture Sa2 of the device management screen scr based on the acquired information to generate a captured images. Screen capture of the device management screen scr is performed as described above. Then, the FDT frame application 10 converts the generated captured images into a general-purpose image file format (for example, a bitmap format, a JPEG format, or a PNG format) and performs save Sa3 which is a process of saving the converted captured images in a storage area (for example, the storage 20). Then, the FDT frame application 10 performs association to associate the captured images saved in the storage area with a corresponding piece of device data d1 which is stored in advance in the storage in association with each field device 1 based on the device identifier specified above.

According to the procedure described above, saving of the captured images through the DTM screen capture Sa2 and association of the captured images with a corresponding piece of the device data d1 of each field device 1 are performed in the device management apparatus 2 according to the present embodiment. As described above, when saving of the captured images generated through the DTM screen capture Sa2 and association of the captured images with a corresponding piece of the device data d1 of each field device 1 are performed using the device management apparatus 2 according to the present embodiment, the user only needs to perform an operation input for issuing the capture instruction Sa1, and therefore a work load on the user is reduced.

In the above description, it is assumed that the FDT frame application 10 of the device management apparatus 2 performs the DTM screen capture Sa2 on the device management screen scr to generate and save a still image in the storage 20, but the present invention is not limited thereto. For example, a moving image indicating the state of the device management screen scr in a predetermined or designated period may be generated and saved in the storage 20. This allows the user to check past changes in the state of the device management screen scr afterwards by viewing the saved moving image.

### [Exemplary screen of device management apparatus]

A device management screen displayed by the device management apparatus 2 according to the present embodiment will now be described with reference to the drawings.

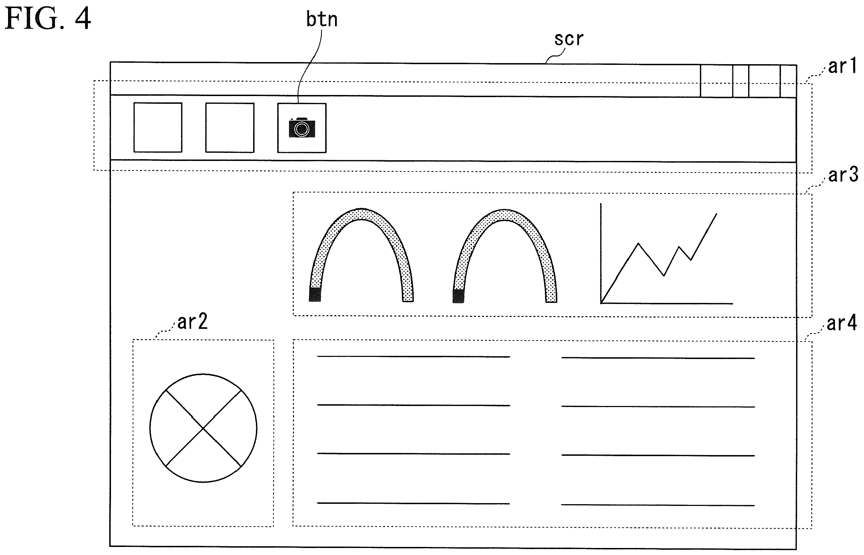

FIG. 4 is a schematic diagram showing an example of the device management screen displayed by the device management apparatus 2 according to the first embodiment of the present invention.

The device management screen scr illustrated in FIG. 4 includes four screen areas (ar1 to ar4) as shown.

A plurality of (three in FIG. 4) icon images for the user to perform operation input are displayed side by side in the screen area ar1, and one of the icon images is the screen capture button btn described above.

For example, a capture instruction is given to the FDT frame application 10 of the device management apparatus 2 by positioning the pointer (not shown) on a screen area in which an image of the screen capture button btn in the screen area ar1 is displayed in the device management screen scr displayed on the display and clicking using the mouse (not shown) having the operation input device 40 of the device management apparatus 2. Thereby, screen capture of the device management screen scr is performed in the device management apparatus 2, and the captured images is stored in the storage area (for example, the storage 20) in association with the device data.

A device image showing the appearance of a field device (one of the field devices 1a to 1c) which is managed by the DTM (one of the DTMs 30a to 30c) that generates the device management screen scr is displayed in the screen area ar2. It is to be noted that the device image may be an appearance image displayed to facilitate the user to identify which one of the field devices 1a to 1c is the field device corresponding to the device management screen scr or may be an appearance image displayed to allow the user to visually identify the actual state of the field device corresponding to the device management screen scr (for example, to read a measurement value displayed on the field device or to check a lamp that is lit on the field device).

For example, images which visually represent measurement values, setting values, or the like of the field device by graphs such as gauge graphs (meter graphs) or line graphs, tables, figures, or the like are displayed in the screen area ar3.

Information in a text format regarding measurement values and setting values of the field device is displayed in the screen area ar4.

### [Operation of device management apparatus]

The operation of the device management apparatus 2 according to the present embodiment will now be described with reference to the drawings.

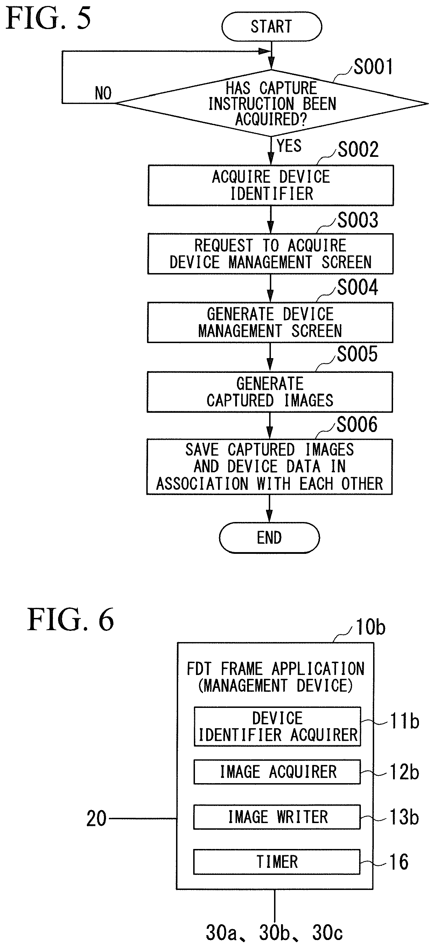

FIG. 5 is a flowchart showing an example of the operation of the device management apparatus according to the first embodiment of the present invention. This flowchart starts, for example, when a capture instruction is given to the FDT frame application 10 of the device management apparatus 2 by positioning a pointer on a screen area in which an image of the screen capture button btn is displayed in the screen area ar1 in the device management screen scr displayed on the display having the display 50 (or on a screen area in which a menu item indicating screen capture is displayed in a menu (not shown) in the device management screen) and clicking using a mouse having the operation input device 40 of the device management apparatus 2.

(Step S001) When the FDT frame application 10 (management device) of the device management apparatus 2 has acquired a capture instruction, the procedure proceeds to step S002. Otherwise, the procedure remains at step S001.

(Step S002) The device identifier acquirer 11 in the FDT frame application 10 of the device management apparatus 2 specifies a device identifier of a field device (one of the field devices 1a to 1c) that is managed by a DTM (one of the DTMs 30a to 30c) corresponding to a device management screen on which screen capture is to be performed based on the device management screen that is being displayed by the display 50 or based on information included in the capture instruction. Thereafter, the procedure proceeds to step S003.

(Step S003) The image acquirer 12 in the FDT frame application 10 of the device management apparatus 2 outputs a request to acquire the device management screen to the DTM that generates the device management screen that is to be captured. Thereafter, the procedure proceeds to step S004.

(Step S004) The DTM (one of the DTMs 30a to 30c) of the device management apparatus 2 acquires the device management screen acquisition request output by the image acquirer 12 in step S003. Then, the screen generator 31 of the DTM (one of the DTMs 30a to 30c) acquires information indicating a measurement value or a setting state or the like from the field device (one of the field devices 1a to 1c) that is managed by the DTM and generates information indicating the device management screen.

Then, the DTM (one of the DTMs 30a to 30c) outputs the generated information indicating the device management screen to the FDT frame application 10. Thereafter, the procedure proceeds to step S005.

(Step S005) The image acquirer 12 in the FDT frame application 10 of the device management apparatus 2 acquires the information indicating the device management screen output from the DTM (one of the DTMs 30a to 30c) in step S004. Then, the image acquirer 12 generates a captured images (an image) by executing screen capture on the device management screen based on the acquired information. Then, the image acquirer 12 converts the generated captured images into a general-purpose image file format (for example, a bitmap format, a JPEG format, or a PNG format) and outputs the converted image file to the image writer 13. Thereafter, the procedure proceeds to step S006.

(Step S006) Upon acquiring the captured images output from the image acquirer 12 in step S005, the image writer 13 in the FDT frame application 10 of the device management apparatus 2 saves the acquired captured images in a storage area (for example, the storage 20). Then, the image writer 13 performs an association process to associate the captured images saved in the storage area with a corresponding piece of device data which is stored in advance in the storage 20 in association with each of the field devices 1a to 1c based on the device identifier.

This completes the processing of this flowchart.

In the device management apparatus 2 according to the first embodiment of the present invention, the FDT frame application 10 has a function of capturing the device management screen (DTM screen), a function of saving the captured images generated through screen capture in the storage 20 in association with device data (for example, a device identifier (such as a device ID or a serial number)), and a function of saving (or converting) the generated captured images in (or into) a general-purpose image file format as described above.

Thus, in the device management apparatus 2 according to the first embodiment of the present invention, to perform saving of the captured images generated through screen capture of the device management screen and association of the captured images and the field devices with each other, the user only needs to perform an operation input for issuing a capture instruction, and therefore it is possible to easily manage the captured images of the device management screen.

### <Second embodiment>

A second embodiment of the present invention will now be described.

In the device management apparatus 2 according to the first embodiment described above, a captured images is generated and stored as a capture instruction is given, which is an instruction to perform screen capture of a device management screen and is based on an operation input performed by the user. On the other hand, in the device management apparatus 2 according to the second embodiment which will be described below, a timer 16 for generating a capture instruction according to the time or a period of time is provided and therefore a captured images can be generated and saved automatically at regular intervals or at a preset time(s).

### [Functional configuration of FDT frame application]

A function configuration of an FDT frame application 10b of a device management apparatus (not shown) according to the present embodiment will now be described with reference to the drawings.

The configuration of the device management apparatus 2 and the configuration of the device management system MS other than the FDT frame application are the same as those of the first embodiment and therefore the description thereof will be omitted.

FIG. 6 is a block diagram showing the functional configuration of the FDT frame application 10b of the device management apparatus according to the second embodiment of the present invention.

The FDT frame application 10b of the device management apparatus according to the second embodiment is a main application of the device management apparatus designed using FDT technology, similar to the FDT frame application 10 of the device management apparatus 2 according to the first embodiment described above. The FDT frame application 10b manages the DTMs 30a to 30c and provides the user with an interface for enabling them to operate the DTMs 30a to 30c.

As shown, the FDT frame application 10b (management device) includes a device identifier acquirer 11b, an image acquirer 12b, an image writer 13b, and a timer 16.

The device identifier acquirer 11b acquires, from each of the DTMs 30a to 30c that respectively manage the field devices 1a to 1c, a corresponding one of device identifiers which are identifiers identifying the field devices 1a to 1c and which are associated respectively with the field devices 1a to 1c.

Upon acquiring a capture instruction output from the timer 16, the image acquirer 12b acquires a device identifier acquired by the device identifier acquirer 11b. Then, the image acquirer 12b acquires information indicating a device management screen (a screen that indicates the state or the like of a field device 1a to 1c and that is generated by a DTM 30a to 30c) from the DTM 30a to 30c that manages the field device 1a to 1c corresponding to the acquired device identifier. Then, the image acquirer 12b generates a captured images (image) by executing screen capture of the device management screen based on the acquired information.

The image writer 13b writes the information based on the device identifier acquired by the device identifier acquirer 11b and the captured images acquired by the image acquirer 12b to the storage 20 in association with each other.

The timer 16 has a timing function to output information indicating a capture instruction (an image acquisition instruction) to the image acquirer 12b according to the time or a period of time.

As described above, the device management apparatus 2 according to the second embodiment of the present invention is provided with the timer 16 for generating a capture instruction, which is an instruction to acquire a captured images of a device management screen, according to the time and a period of time such that a captured images is generated and saved automatically at regular intervals or at a preset time(s). Thus, in the device management apparatus 2 according to the second embodiment of the present invention, an operation input of the user for performing screen capture of a device management screen and association of the captured images and the field device with each other is not particularly needed, and therefore the user can easily manage captured images of the device management screen.

Further, in the related-art technology for reproducing device management screens using DTM save data, an application (for example, an FDT frame application or a DTM) for reproduction is needed for all terminals for reproducing device management screens. On the other hand, the device management apparatus 2 according to the first and second embodiments of the present invention converts an acquired captured images into a general-purpose image file format (for example, a bitmap format, a JPEG format, or a PNG format) and saves the converted captured images in the storage area. As a result, in the device management apparatus 2 according to the first and second embodiments of the present invention, an application (for example, an FDT frame application or a DTM) for displaying device management screens is not necessarily needed for the terminals for displaying captured images.

Therefore, according to the device management apparatus 2 according to the first and second embodiments of the present invention, a preliminary task of constructing an environment such as setup of an application for reproducing device management screens is unnecessary for each of the terminals for displaying captured images and, even when there are many terminals for displaying captured images, device management screens based on the captured images can easily be displayed.

In addition, as described above, the device management apparatus 2 according to the first and second embodiments of the present invention converts the acquired captured images into a general-purpose image file format and saves the converted captured images in the storage area, and therefore image data of the common format is accumulated without being influenced by the difference in functional specifications between the DTMs 30a to 30c (device controllers).

That is, according to the device management apparatus 2 according to the first and second embodiments of the present invention, there is no need for the user to construct an environment for acquiring and displaying captured images for each of the DTMs 30a to 30c in accordance with the difference in functional specifications between the DTMs 30a to 30c and it is also possible to easily construct an environment in which various terminals can display device management screens generated by the DTMs 30a to 30c having various functional specifications.

It is to be noted that all or a part of the device management apparatus 2 in the embodiments described above may be realized by a computer. In this case, the same may be realized by recording a program for realizing corresponding control functionality on a computer readable recording medium and causing a computer system to read and execute the program recorded on the recording medium.

The "computer system" referred to here is a computer system that is incorporated in the device management apparatus 2 and includes an OS or hardware such as a peripheral device. Further, the "computer-readable recording medium" refers to a flexible disk, a magneto-optical disc, a ROM, a portable medium such as a CD-ROM, or a storage device such as a hard disk provided in a computer system.

Further, the "computer-readable recording medium" may include a medium that dynamically holds the program for a short period of time such as a communication wire in the case in which the program is transmitted via a network such as the Internet or a communication line such as a telephone line or a medium that holds the program for a certain period of time such as a volatile memory in a computer system serving as a server or a client in that case. Furthermore, the program may be one for realizing some of the functions described above and may also be one that can realize the functions described above in combination with a program already recorded in the computer system.

All or a part of the device management apparatus 2 in the above embodiments may be realized as an integrated circuit such as large scale integration (LSI). Each of the components of the device management apparatus 2 may be individually implemented as a processor or all or some thereof may be integrated into a processor. Further, the method of forming an integrated circuit is not limited to LSI and may be realized using a dedicated circuit or a general-purpose processor. Furthermore, when an integrated circuit technology replacing LSI emerges due to advances in semiconductor technologies, an integrated circuit based on the technology may be used.

It should be noted that the sequence of execution of the processes of operations, procedures, steps, stages, and the like in the apparatuses, systems, programs, and methods shown in the claims, the specification, and the drawings can be realized in any order unless otherwise specified as "before," "prior to" or the like and unless the output of a previous process is used in a subsequent process. Even if any flow of operations in the claims, the specification, and the drawings has been described with "first," "next" or the like for the sake of convenience, this does not mean that it is indispensable to carry out the operations in the order mentioned.

As used herein, the following directional terms "front, back, above, downward, right, left, vertical, horizontal, below, transverse, row and column" as well as any other similar directional terms refer to those instructions of a device equipped with the present invention. Accordingly, these terms, as utilized to describe the present invention should be interpreted relative to a device equipped with the present invention.

The term "configured" is used to describe a component, unit or part of a device includes hardware and/or software that is constructed and/or programmed to carry out the desired function.

Moreover, terms that are expressed as "means-plus function" in the claims should include any structure that can be utilized to carry out the function of that part of the present invention.

The term "unit" is used to describe a component, unit or part of a hardware and/or software that is constructed and/or programmed to carry out the desired function. Typical examples of the hardware may include, but are not limited to, a device and a circuit.

While preferred embodiments of the present invention have been described and illustrated above, it should be understood that these are examples of the present invention and are not to be considered as limiting. Additions, omissions, substitutions, and other modifications can be made without departing from the scope of the present invention. Accordingly, the present invention is not to be considered as being limited by the foregoing description, and is only limited by the scope of the claims.

## Claims

1. A device management apparatus comprising:
a device controller configured to control a device; and
a management device configured to manage the device controller,
wherein the device controller comprises:
a screen generator configured to generate information representing a screen based on information acquired from the device corresponding to a device identifier, and
the management device comprises:
a device identifier acquirer configured to acquire the device identifier;
an image acquirer configured to acquire information representing the screen from the device controller controlling the device corresponding to the device identifier, the image acquirer being configured to generate an image based on the information representing the screen; and
an image writer configured to write the device identifier and the image to a storage in association with each other.

2. The device management apparatus according to claim 1,
wherein the storage stores the device identifier and the image which are associated with each other by the image writer.

3. The device management apparatus according to claim 1 or 2, further comprising:
an operation input device configured to receive an operation input from a user,
wherein the device identifier acquirer is configured to acquire the device identifier based on the operation input.

4. The device management apparatus according to any one of claims 1 to 3,
wherein the information that the screen generator acquires from the device is information regarding a measurement value measured by the device or information regarding setting of the device.

5. The device management apparatus according to any one of claims 1 to 4,
wherein the management device includes a timer configured to output an image acquisition instruction to the image acquirer according to a time or a period of time, and
wherein the image acquirer is configured to acquire the information representing the screen from the device controller based on the image acquisition instruction.

6. The device management apparatus according to any one of claims 1 to 5,
wherein the image acquirer is configured to generate the image as a captured image by capturing a screen based on the information representing the screen.

7. The device management apparatus according to any one of claims 1 to 6,
wherein the image generated by the image acquirer is a still image or a moving image.

8. A device management method for controlling a device management apparatus which comprises a device controller configured to control a device and a management device configured to manage the device controller, the device management method comprising:
generating, by the device controller, information representing a screen based on information acquired from the device corresponding to a device identifier;
acquiring the device identifier by the management device;
acquiring, by the management device, information representing the screen from the device controller controlling the device corresponding to the device identifier,
generating, by the management device, an image based on the information representing the screen; and
writing, by the management device, the device identifier and the image to a storage in association with each other.

9. The device management method according to claim 8,
storing into the storage, by the management device, the device identifier and the image which are associated with each other.

10. The device management method according to claim 8 or 9,
wherein the device management apparatus further comprises an operation input device configured to receive an operation input from a user, and
wherein the device management method further comprises:
acquiring, by the management device, the device identifier based on the operation input.

11. The device management method according to any one of claims 8 to 10,
wherein the information that the device controller acquires from the device is information regarding a measurement value measured by the device or information regarding setting of the device.

12. The device management method according to any one of claims 8 to 11, further comprising:
outputting, by the management device, an image acquisition instruction according to a time or a period of time; and
acquiring, by the management device, the information representing the screen from the device controller based on the image acquisition instruction.

13. The device management method according to any one of claims 8 to 12, further comprising:
generating, by the management device, the image as a captured image by capturing a screen based on the information representing the screen.

14. A device management program configured for execution by a computer of a device management apparatus which comprises a device controller configured to control a device and a management device configured to manage the device controller, the device management program comprising instructions for:
generating, by the device controller, information representing a screen based on information acquired from the device corresponding to a device identifier;
acquiring the device identifier by the management device;
acquiring, by the management device, information representing the screen from the device controller controlling the device corresponding to the device identifier,
generating, by the management device, an image based on the information representing the screen; and
writing, by the management device, the device identifier and the image to a storage in association with each other.

15. A non-transitory computer readable storage medium storing one or more device management programs configured for execution by a computer of a device management apparatus which comprises a device controller configured to control a device and a management device configured to manage the device controller, the one or more device management programs comprising instructions for:
generating, by the device controller, information representing a screen based on information acquired from the device corresponding to a device identifier;
acquiring the device identifier by the management device;
acquiring, by the management device, information representing the screen from the device controller controlling the device corresponding to the device identifier,
generating, by the management device, an image based on the information representing the screen; and
writing, by the management device, the device identifier and the image to a storage in association with each other.
